# EUROPEAN PATENT APPLICATION

(11) **EP 1 386 841 A2**
(43) Date of publication of application: **04.02.2004**
(21) Application number: 03254099.9
(22) Date of filing: 27.06.2003
(51) Int. Cl.: B65B 31/04

(54) **Method and machine for forming a sealed air bag**

(30) Priority: 31.07.2002 GB 0217717
(71) Applicant: Easypack Limited, Welwyn Garden City, Hertfordshire AL7 1EW (GB)
(72) Inventor: Davey, Trevor, c/o Easypack Limited, Unit 4, Welwyn Garden City,Hertfordshire AL7 1EW (GB)
(74) Representative: Sherrard-Smith, Hugh

(57) **Abstract**

A film is advanced in steps past the sealing station 20. The sealing station moves down to effect a cross seal to trap air in pockets downstream of the sealing station. At the same time that the sealing station 20 is moved downwardly an air paddle 92 also moves downwardly with the paddle moving about a pivot 94 to waft or urge air along the tube, past the sealing station just prior to a seal being effected.

In normal filling, when the seal is made the paddle 92 is substantially horizontal. However, if a bag 140 is completely full and excess air is included in the tube, the paddle moves past the horizontal to actuate a micro switch to reduce the duration that the needle 18 injects air into the next bag to be formed.

## Description

The present invention relates to air bag manufacturing machines and a method of making sealed air bags.

Plastic bags comprising relatively small pockets containing air are known for use in the packaging industry. The air bags are usually placed between a container and an article to be transported in order that the article is cushioned from the side walls of the container and therefore is unlikely to suffer damage during transportation.

In an existing machine that is used for this purpose, a tube of plastics is advanced and then halted in order that an air injector can pierce one layer of the film to the space between the layers. Air from an electrically charged compressor is then injected in order to force air into and divert the opposed portions of the tubular plastics. Seals are provided periodically along the length of the plastics in order to define the closed bags and to retain the air between the seals. The seals are applied in the form of two closely spaced apart seals in order that the hole that has been made by the injector piercing the film can be between those seals without air being able to escape from that injection hole.

Air is injected into the tube whilst the plastics is stationary. The plastics is then advanced to a sealing station that applies the two seals. Consequently, there is a loss of air through the injection hole before sealing which loss is difficult to predict. In addition, as the film is stationary during both the injection and during the sealing operations, the production of bag rates is relatively slow.

In our co-pending but as yet unpublished European Patent application number 02 251571.2 an alternative way of making air bags is shown in which:-
Figure 1 is a side view of the bag filling machine;
Figure 2 is a plan view of Figure 1;
Figure 3 is a plan view of the downstream end of the packaging machine;
Figure 4 is a side view showing the details of the bag sealing part of the machine;
Figure 5 is an end view of the air filling part of the machine;
Figure 6 is a side view of the air filling region of the machine;
Figure 7 is a schematic view of a string of bags, and
Figures 8, 9 and 10 are side, plan and end views respectively of the air injection assembly.

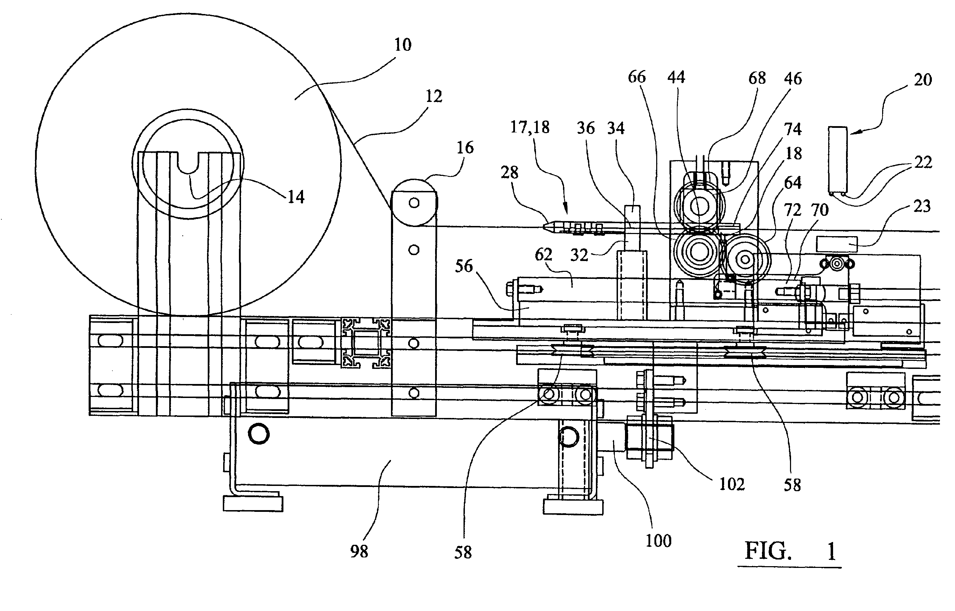

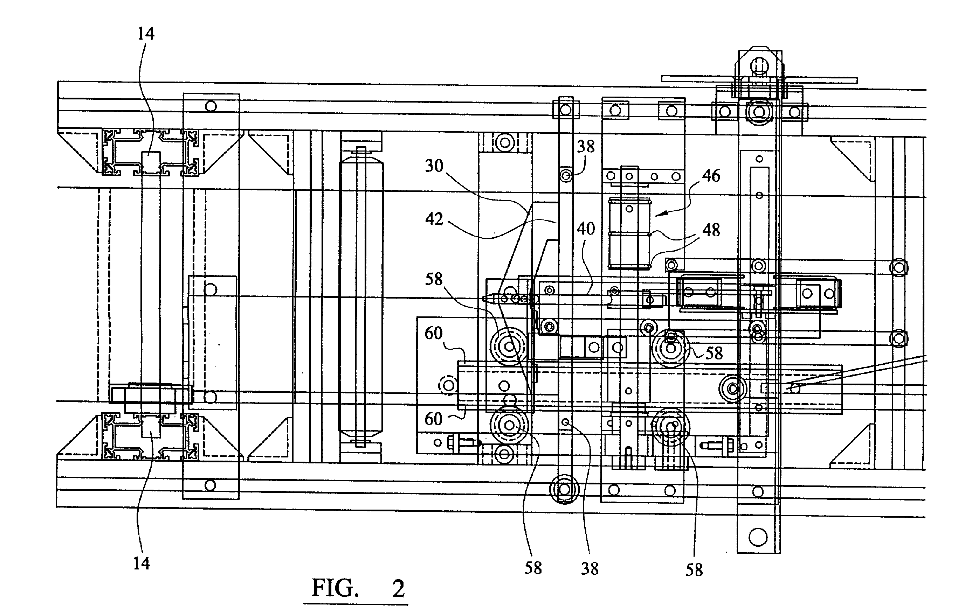

As shown in Figures 1 and 2, a roll 11 of tubular film 12 is mounted on spaced supports 14 such that film can be unwound by pulling film 12 off the roll 10. The film travels under a roller 16. In an alternative embodiment (not shown), film is drawn off the roll 10 from the under side, such that the roll 10 rotates in the opposite direction from that shown, with the film passing over the roller 16 instead of under it.

The film then passes around an opener 17 that separates opposed sides of the film comprising the tube to a small extent. The tube then has an air injection needle 18 moved upwardly to pierce the lower layer of film which injects air into the tube to at least partially fill the tube with air. The film then passes beneath a sealing station 20 that is able to move down and apply two spaced heat seal wires 22 across the width of the bag to an anvil 23 to seal longitudinal extents of the tube from each other. In an alternative embodiment, the heated anvil is moved downwardly to be urged against two spaced stationary heated wires to apply the seals. In this alternative embodiment a perforation blade can come up through the anvil, between the seals with that blade being driven by a cam fixed to a shaft. The portion of the tube that has previously been pierced by the needle 18 is located between these seal wires 22 to prevent the bags from deflating through that opening.

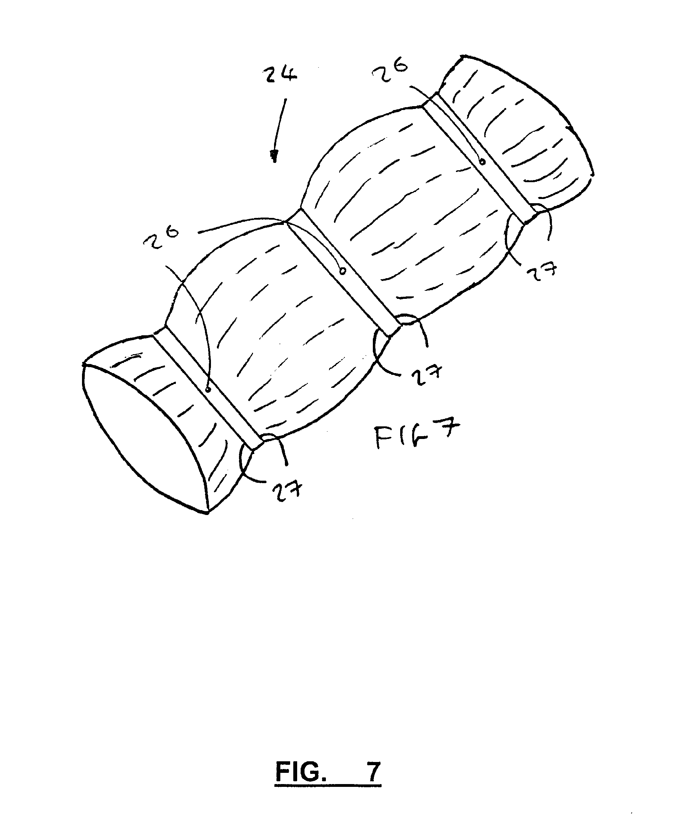

The bags can then be wound up on a collection roller or be simply fed from the machine. A typical string of bags 24 is illustrated schematically in Figure 7. These show the hole 26 formed by the injection needle being located between the seals 27 formed by the wires 22 with the tube between successive pairs of seals being inflated to form bags. If desired a perforated weakened portion can be made across the film, between each pair of seals 22 such that each bag can be separated from the string 24.

Alternatively, each bag can be separated by cutting across the string between each pair of seals 22.

In order to load the machine the open end of tube of film is fed over a leading end 28 of the opener and two flights 30 that extend from either side of the end 28 such that the tube surrounds those parts. In addition, the tube is advanced to extend between two guides 32 and 34 that define a slot 36 between them for the film. During loading, the upper guide 34 is moved away from the lower guide 32 by unscrewing wing nuts (not shown) that extend through threaded openings 38 at either side of the guides. The tapered end 28 of the opener is formed on the front end of a rod 40 that extends through a correspondingly shaped tubular recess defined by the upper and lower guides, which recess is of slightly greater dimensions than the rod 40. The flights 30 extend rearwardly and outwardly from the front end 28 with the rear end 42 of the flights being of slightly greater depth than the slot 36 (when the wing nuts bring the guides back towards each other) such that the flights and rod are not able to move to the right, when viewed in the drawings.

Thus the tube leaves the guides in a generally flat form with the central portion of the film being spaced from each other in the shape defined by the rod.

The film is then fed past lower and upper driven rollers 44 and 46. The rollers define a nip between them at either side having rubber rings 48 on the upper roller. At the central region of the rollers there is a gap to accommodate the rod 40. If desired, instead of or in addition to the flights cooperating with the portions defining the slot 36 to prevent rearwards movement of the opener 17, the rod could include an enlarged portion that is unable to pass between the rollers 66 and 68.

The upper roller is biased downwardly towards the lower roller by a pair of springs (not shown) to enhance the nip. During loading the rollers may rotate to advance the film. An alternative way of loading the film could comprise raising the upper roller 46 and the upper guide 34 about a pivot, such as a common pivot, to allow the film to enter the area between those parts.

The tube leaves the rear end of the rod 40 and passes through the sealing station 20.

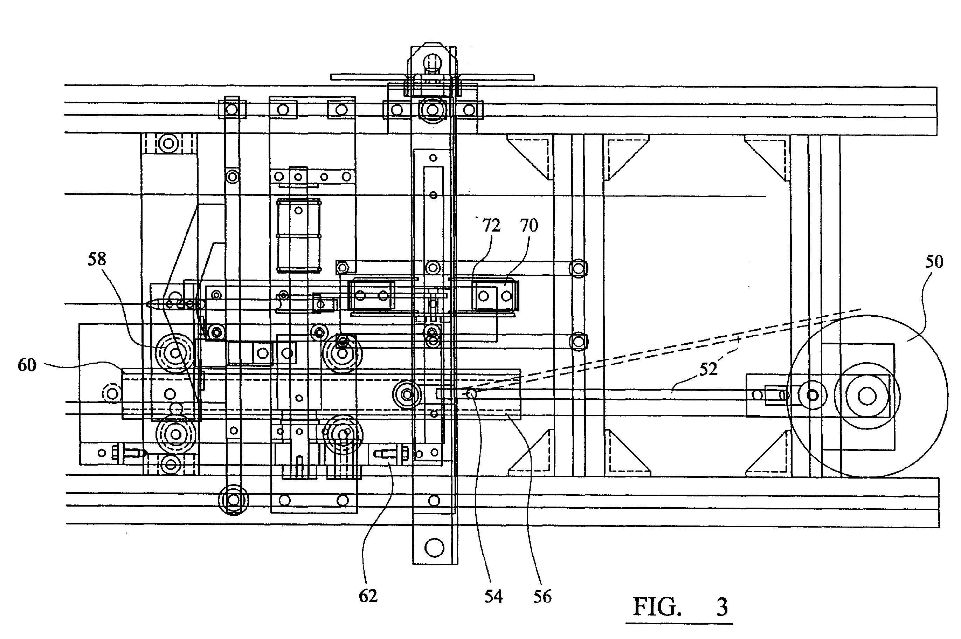

The film is advanced by rotation of an operating disc 50 shown in Figure 3. The disc 50 carries a pivotally mounted shaft 52 that is connected, at its other end, by a pivot 54 to a carriage 56. It can be seen that as the disc 50 rotates, the shaft 52 pulls the carriage back and forth. The carriage cooperates with two pairs of opposed grooved rollers 58 that cooperate with ribs 60 on the carriage to constrain the carriage to move in a linear direction.

During rearwards movement of the carriage (ie to the right when viewed in Figure 3) a rack gear 62 that is fast with the carriage meshes with a fixed but rotatable cog 64 to drive that cog in an anticlockwise direction. The cog 64 in turn meshes with a cog 66 at the end of the lower roller which in turn meshes with a cog 68 at the end of the upper roller 46. Rotation of the cogs 66 and 68 drive the rollers 44 and 46 to move the film to the right thereby pulling the film off the rod. This direction of movement is referred to as the charging period. During forwards movement of the carriage, whilst the shaft 52 pushes the carriage away from the disc 50, the cogs still mesh. This forwards movement is referred to as the rest period. However, the cogs are fitted with a dog clutch that prevents movement of the associated rollers. Thus the rollers hold the film fast when the carriage is returning. In this way the film is advanced and held and then advanced again in a continuous cycle.

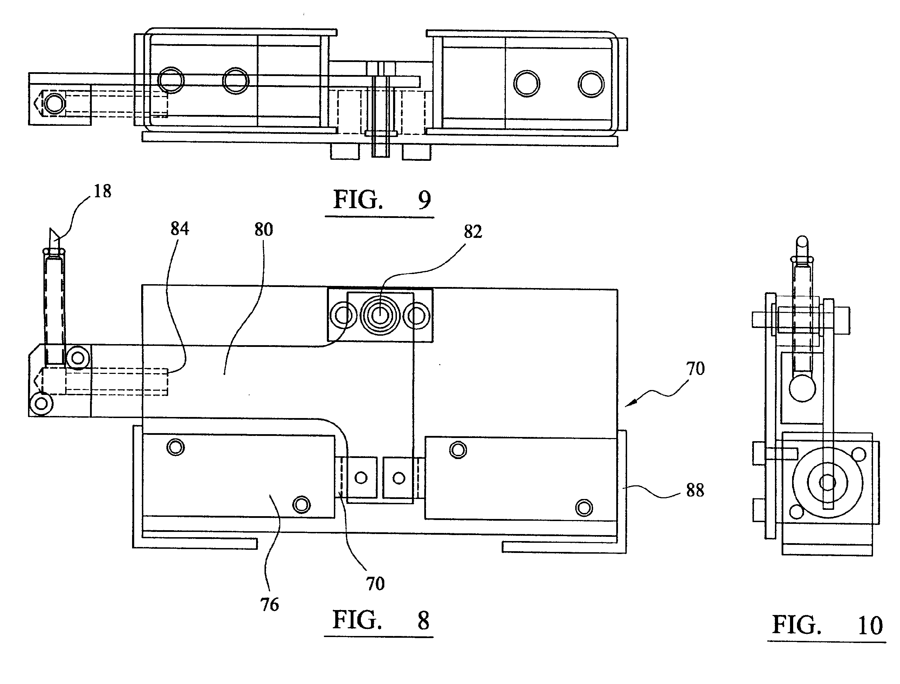

The carriage 56 also moves with an injection needle support 70 shown in Figures 8 to 10. The support 70 has its own linear carriage 72 that is constrained to move with the main carriage 56. Whilst the support 70 normally moves with its carriage 72 under friction, the support 70 can be held such that it does not always move with the carriage 72 for a limited extent. The purpose of this will be explained later.

The injection needle 18, just before a charging period, is in the position shown in Figures 1 and 8 where it is just below the film. The needle is moved upwardly, from the position shown in Figure 1 to pierce the lower layer of the film. Piercing of the lower layer, without piercing the upper layer, is ensured by the needle entering a downwardly facing recess 74, in the rear of the rod 40, across which the lower layer of film is held taut.

The needle is caused to be raised by a solenoid 76 being actuated to retract a plunger 78, as seen in Figure 8. That movement causes a plate 80 carrying the needle 18 to move about a pivot 82 to cause the needle to move upwardly.

As movement of the carriages commences during a charging stroke, compressed air is supplied to the needle in a manner to be described later through a conduit 84 such that air is forced into the tube of film. The support 70 is constrained to move by frictional engagement of the carriage 72 rearwardly, to the right with the film, for the charging period.

Just before the needle arrives at the charging station 20, the needle is lowered by the return movement of the plunger 78 of the solenoid to withdraw the needle from the film. An abutment 88 on the support 70, at or just after withdrawal of the needle, contacts a fixed part of the machine (not shown) to prevent further movement of the carriage with the carriage 72.

During that further movement of the carriage 72, the film continues to be moved to the right until the hole in the tube caused by the needle is located between the seals 22. At that time the disc has momentarily stopped pulling the carriage 56 rearwardly and is just about to push the carriage 56 forwardly. During that change over of the direction of movement, the upper wires 22 are moved downwardly to force the film against the anvil 23 to seal the opposed layers of film at two spaced apart heat welds.

After the seals have been made, or indeed whilst the seals are being made, the carriage returns in the rest period direction until the components arrive at the position shown in Figure 1 where the apparatus is ready to start a new charging period.

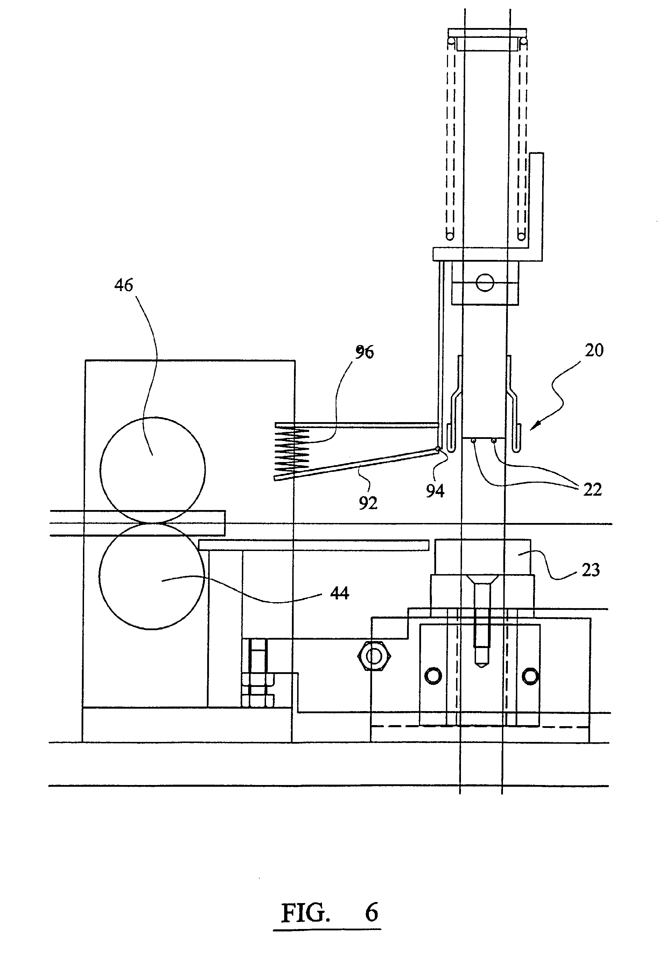

Figure 6 shows more details of the charging of a bag. It will be appreciated that the bag that is being sealed, (that is the bag that already has a front pair of seals located downstream of the sealing station 20 the sealing station marking a pair of rear seals) is the one that requires the air to be trapped in it. The bag that is being sealed is comprised between a downstream seal and a seal to be made at the sealing station. Thus just before the seal is made air may tend to leak back through the sealing station which may resist in unreliable filling to reduce that effect. As the heated wires 22 move downwardly they take with it an air paddle 92. The air paddle extends rearwardly and downwardly to push air from the region that has just been injected forwardly, through the space between the anvil 23 and wires 22 into the bag that is formed moments later by the heat seal. The paddle is mounted on a pivot 94 such that it can move upwardly, against a resilient spring 96 to prevent an undue force being applied to the bag. In addition, as the paddle yields against the spring it moves more towards the horizontal to assist in moving the air forwards until, just before the seal is made, it is generally horizontal, with substantially all of the air having been moved forwardly.

The air that is supplied to the injection nozzle comes from a pneumatic cylinder 98, as seen in Figure 1. A piston shaft 100 of that cylinder is constrained to move with the carriage 56 by being attached to a plate that is fast with the carriage. As the carriage moves during the charging period, the piston shaft 100 moves to the right to cause a piston attached to the shaft to compress and expel air from the cylinder via an outlet 102. That outlet is connected by a tube to the conduit 84. The pressure or volume of the air that is supplied to the injection nozzle can be varied by means (not shown) that may for instance, direct a portion of the air to the environment. That variation may be used to alter the amount of bag inflation or to allow different sizes of bag, for instance of different widths or lengths to be filled to the same or different degrees of pressure or volume. Furthermore, bags of the same size can have different volumes of air supplied to them for use in different packaging applications.

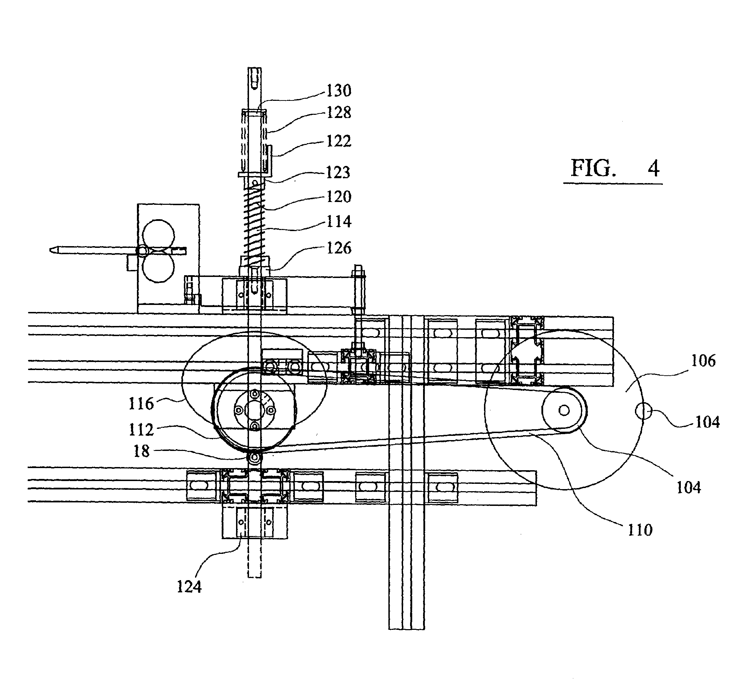

The operation of the sealing station will now be described, with reference to Figure 4. This shows a manually operable handle 104 that rotates a plate 106. A sprocket drive 108 drives a chain 110 that in turn rotates a sprocket 112. The axis of the sprocket 112 is in line with the direction of movement of operating arms 114. A cam 116 is constrained to rotate with the sprocket 112. If desired, a shaft may extend across the machine having its axis coincident with the rotational axis of the sprocket 112 and be connected to a cam 116 at the other side such that both arms are driven by the cam. However, the action of only one cam will be described for simplicity.

As the cam 116 rotates downwardly its surface bears against a roller 118 mounted on the arm 114 such that the arm is forced down against the action of a spring 120 that abuts a stop 123 on the arms 114 and the top of an arm guide 126 at its lower end. The lower end of the arm 114 is driven down through a guide 124.

An upper blade carrying the wires 22 is connected to a cross plate 122 and moves downwardly with that plate. Just before the cam moves the roller 118 to its lowest point sealing occurs by pressure being applied at the sealing station. (In an alternative embodiment, not shown, the heating wires may be located beneath the sealing station such that they do not move up and down. Rather, a plate is moved down to urge the film against the sealing wires). However, although the arms 120 continue to move downwardly to the lowest point, the pressure at the sealing station means that the upper blade carrying the wires and therefore the plate 122 is unable to move down any further. Consequently the plate 122 to which the upper plate is connected remains where it is as the arms 120 continue to move down, for instance by a further 10 mm. That differential movement is taken up by the arms sliding downwardly relative to the cross plate to further compress a spring 128 acting between a fixed point 130 on the arms and the upper surface of the cross plate.

Pressure at the sealing station is alleviated when the arms 120 have moved back up such that the stops 123 engage and lift the plate.

In an alternative embodiment (not shown) a perforation blade is caused to move upwardly to create a weakened line of opening across the film either as the seals by the wires in either embodiment are being made or shortly after those seals have been made. The perforation blade may be driven by a cam attached to the sprocket on the cam shaft.

The operating handle travels one revolution for one complete cycle. The operating plate 106 is also connected to a horizontal shaft that drives a bevel gear to cause the disc 50 that controls the carriage to undergo one revolution for each revolution of the operating handle. Thus all parts of the machine are synchronised. It will be appreciated that a power drive such as an electric motor can be used to drive the machine in place of the handle.

A problem with bag filling machines is that, after a seal is made, some air will remain in the tube upstream of the last seal that has been made by the machine. That is because all of the air that has been injected into the tube cannot be contained between two seals. Consequently, when air is next injected into the tube, the amount newly injected is added to the amount of air upstream of the last seal until an additional seal is made. The newly formed bag with the additional seal will thus progressively increase in volume until it reaches its maximum possible size. In addition, the air that remains upstream of each successive last seal that is made will progressively increase. Ultimately, the machine will jam up and bags will no longer be able to be provided as the tube of film becomes too large (either before or after or during injection of air) to be able to be advanced. This problem is not limited to machines where air is injected to fill a bag or to machines where the tube comprises a preformed tube and applies to many types of air bag making machines.

It is an object of the present invention to attempt to overcome at least one of the above or other disadvantages.

According to one aspect of the present invention a method of forming sealed air bags comprises supplying air to sheet material to move opposed portions of the sheet material away from each other and sealing the sheet material to form a sealed bag and monitoring the air located between opposed portions of sheet material and varying the air supply in dependence upon that monitoring.

The method may comprise monitoring the amount of air located between opposed portions of sheet material before those portions have been sealed to form a bag. The method may comprise monitoring the amount of air upstream of a sealing station.

The method may comprise monitoring the distance between opposed portions of sheet material or the pressure of air within opposed portions of sheet material.

The method may comprise pushing air along opposed portions of sheet material from a location upstream of a region that a seal of the bag is to be formed past that location and monitoring a component effecting the pushing.

The method may comprise monitoring sheet material comprising a tube.

The method may comprise varying the air supply by varying the duration that air is effectively supplied. The method may comprise varying the amount of air by altering the duration of activation of a solenoid. The method may comprise varying the amount of air by altering the effective operational duration of a potentiometer.

The method may comprise varying the amount of air used to form a succeeding bag.

The method may comprise the amount of air being supplied being varied to ensure that the total air in each sealed bag is within a range of volumes less than would be the case if no variation in the amount of air being supplied were effected.

The method may comprise varying the amount of air being supplied by less than 20% or more than 5% or in the region of 10%.

The method may comprise varying the amount of air supplied to ensure that each bag is filled substantially to the maximum.

According to a further aspect of the present invention, an air bag manufacturing machine comprises stock supply means arranged, in use, to supply a stock of material to be formed into bags to an air supply station arranged, in use, to at least partially fill a space between opposed portions of material to be formed into bags with air and a sealing station arranged, in use, to seal the material to encapsulate air in the sealed material to form a bag, the machine including monitoring means arranged to monitor air located between opposed portions of material and to alter the air supplied at the air supply station in dependence upon the monitoring means.

The monitoring means may include a volume or a pressure monitoring means.

The monitoring means may be located upstream of the sealing station.

The monitoring means may be arranged to give a first effect and a second effect in which the first effect is that there is no alteration of the air supplied at the air supply station and the second effect is that there is an alteration. The second effect may be to reduce the amount of air supplied at the air supply station. The monitoring means may include a switch which is either on or off.

The machine may include air movement means arranged, in use, to cause air to flow along the stock of sheet material, for instance past the sealing station. The monitoring means may be associated with or mounted on the air movement means.

The air movement means may comprise a member arranged to cooperate with an outwardly facing surface of the stock of material in order to exert a compressive force on that material. The air movement means may be arranged to apply a greater force to the outer surface of the stock of material at an upstream region than the air movement means applies to a downstream region.

The air movement means may comprise a member that is inclined towards the outwardly facing surface of the stock of material in an upstream direction. The member may be pivotally mounted. The member may be movable. The member may be arranged to alter its angle of inclination when the member is moved down towards the outer surface of the stock of material, for instance against a resilient bias.

The air movement means may be arranged to cause air to move past the sealing station prior to sealing occurring.

The angle of the member of the air movement means may be arranged to comprise part of the monitoring means and the angle at a particular period in a cycle of operation may be arranged to comprise part of the monitoring means. For instance, if the angle is less than a predetermined volume then no alteration of the air supplied may be effected but if the angle is greater than the predetermined amount then the air supplied may be arranged to be altered.

The pivotally mounted member may be arranged to be caused to move to a position in which it is inclined towards the outwardly facing surface of the stock of material in a downstream direction with the change towards the downstream inclination, or a significant change in the downstream inclination being arranged to effect an alteration of the air supplied.

The present invention includes any combination of the herein referred to features or limitations.

The present invention can be carried into practice in various ways but one embodiment will now be described with reference to, and as shown in the accompanying drawings in which:

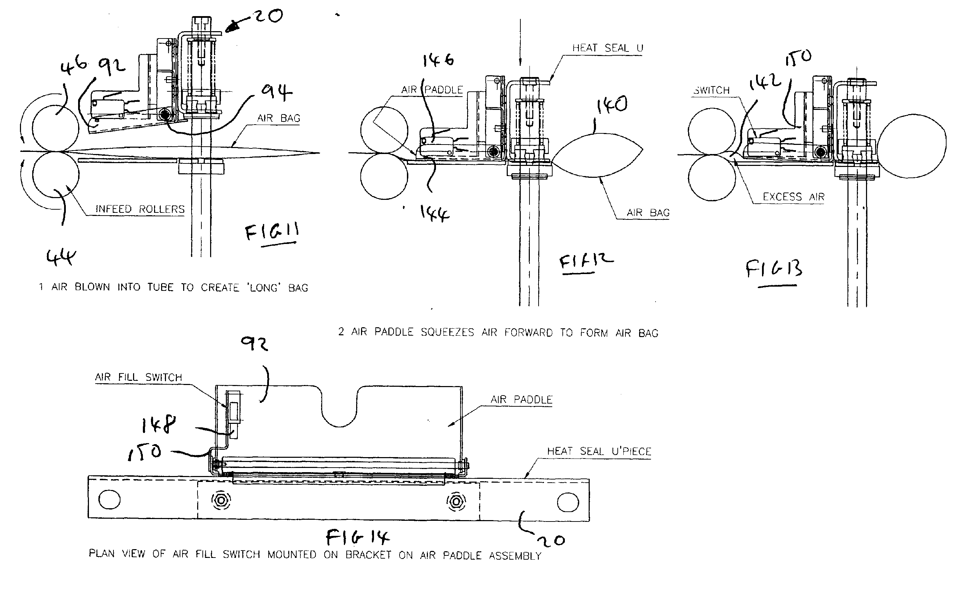

Figures 11 to 13 are side views showing a side view of an air bag filling operation in sequential progression of filling, and
Figure 14 is a plan view of the air paddle 92 and the sealing station shown in Figures 11 to 13.

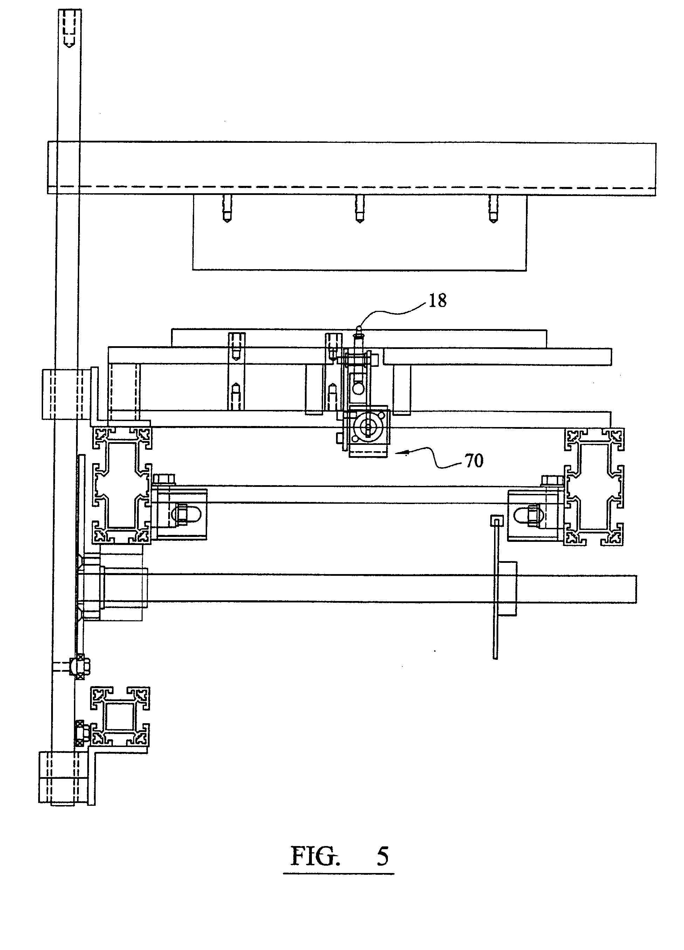

Like parts to those described in Figures 1 to 10 have been given the same reference numerals in Figures 11 to 14.

The film is advanced, filled with air and sealed using the apparatus and method described in relation to Figures 1 to 10. Figures 11 and 12 show the paddle 92 in the raised position. As the wires 72 at the sealing station 20 move downwardly they take with them the air paddle 92. The paddle 92 moves about pivot 94 against the bias of the spring 96 (not shown in Figures 11 to 14 but as described in relation to Figures 1 to 10) to waft or urge the air along the tube, past the sealing station.

In normal filling, the seal is made with the paddle 92 substantially horizontal, as shown in Figure 12. However, if the bag 140 is completely full and excess air is included in the tube, this air must partially fill the tube upstream of the sealing station leading to the jamming previously described, if not solved by the present invention.

As shown in Figure 13, when there is excess air upstream of the sealing station 20, the tube is pushed apart in the region 142. The paddle 92 is permitted to move about the pivot 94, against the action of the spring 96 in a clockwise direction to take into account of the expansion of the tube in the region 142. When this occurs, or occurs to a sufficient extent, a micro switch 144 is pushed into a housing 146 to cause a signal to be generated at 148. The housing 146 is mounted on a bracket 150 that is located to the side and also extends over the paddle with the bracket being constrained to move translationally but not pivotally with the paddle.

The duration that the needle 18 is located in the tube and charges the tube is determined by the actuation and deactivation of the solenoid 76 shown in Figure 8. During normal operation, the solenoid will be activated at a predetermined start time and deactivated to stop the bag being filled after a set period of time has passed. When a signal is generated at 148, the next charging duration can be decreased by 10% for instance such that the filling is commenced at the same time as in the previous cycle but the solenoid 76 is deactivated to move the needle down and cease filling when only 90% of the previous filling time has occurred. In this way, the excess air in the region 142 which, if left to accumulate further, would jam the machine, is able to be pushed through by the paddle into the next bag to be sealed.

The present invention has advantages to all degrees of bag filling but is particularly advantageous to bags that are to be filled to their capacity. Indeed, previously machines have had to be set to fill bags below their capacity to ensure there is at least some delay before the machines jam up due to backing up of air upstream of the seals. However, with the present invention, bags can be produced that are 100% full without jamming of the machine occurring. Thus a more reliably filled bag with a better known performance can be produced without jamming of the machine.

It will be appreciated that the present invention can be used on the machine to produce bags of shorter or longer length or width to those illustrated by altering the width of the tube or the spacing between seals in the feed direction and by suitably altering the duration that the bag is filled for whilst still effecting an "underfill" signal upon detection of excess air by the paddle.

For convenience, the duration that the air injection nozzle is raised for can be determined by turning a control knob on a potentiometer and the control signal generated at 148 can be used to reduce that duration by acting on the signal from the potentiometer when required.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of forming sealed air bags (24) comprising supplying air (18) to sheet material to move opposed portions of the sheet material away from each other and sealing (22) the sheet material to form a sealed bag and monitoring (92) the air located between opposed portions of sheet material and varying the air supply upon dependence upon that monitoring.

2. A method as claimed in Claim 1 comprising monitoring the amount of air located between opposed portions of sheet material before those portions have been sealed to form a bag.

3. A method as claimed in Claim 1 or 2 comprising monitoring the amount of air upstream of a sealing station (20).

4. A method as claimed in any preceding claim comprising pushing air (92) along opposed portions of sheet material from a location upstream of a region that a seal (22) of the bag is to be formed past that location and monitoring (146) a component effecting the pushing.

5. A method as claimed in any preceding claim comprising varying the amount of air used to form a succeeding bag.

6. A method as claimed in any preceding claim comprising the amount of air being supplied being varied to ensure that the total air in each sealed bag is within a range of volumes less than would be the case if no variation in the amount of air being supplied were effected.

7. An air bag manufacturing machine comprising stock supply means (10) arranged, in use, to supply a stock of material (12) to be formed into bags (24) to an air supply station arranged, in use, to at least partially fill a space between opposed portions of material to be formed into bags with air and a sealing station (20) arranged, in use, to seal the material to encapsulate air in the sealed material to form a bag, the machine including monitoring means (144,146) arranged to monitor air located between opposed portions of material and to alter the air supplied (18) at the air supply station in dependence upon the monitoring means.

8. Apparatus as claimed in Claim 7 in which the monitoring means (144,146) is arranged to give a first effect and a second effect in which the first effect is that there is no alteration of the air supplied at the air supply station and the second effect is that there is an alteration.

9. Apparatus as claimed in Claim 7 or 8 in which the air movement means (144) comprises a member that is inclined towards the outwardly facing surface of the stock of material in an upstream direction, the member being arranged to alter its angle of inclination when the member is moved down towards the outer surface of the stock of material.

10. Apparatus as claimed in Claim 9 in which the pivotally mounted member of the air movement means is pivotally mounted (94) and is arranged to be caused to move to a position in which it is inclined towards the outwardly facing surface of the stock of material in a downstream direction with the change towards the downstream inclination being arranged to effect an alteration of the air supplied.
